# EUROPÄISCHE PATENTSCHRIFT

(11) **EP 1 219 159 B1**
(45) Veröffentlichungstag und Bekanntmachung des Hinweises auf die Patenterteilung: **08.06.2005**
(21) Anmeldenummer: 01128575.6
(22) Anmeldetag: 30.11.2001
(51) Int. Cl.: A01D 43/073

(54) **Vorrichtung und Verfahren zur automatischen Steuerung einer Überladeeinrichtung an landwirtschaftlichen Erntemaschinen**
Method and device for the automatic control of a discharging apparatus on agricultural harvesting machines
Procédé et dispositif de commande automatique d'un appareil de transfert de machines agricoles de récolte

(30) Priorität: 23.12.2000 DE 10064861
(43) Veröffentlichungstag der Anmeldung: 03.07.2002
(73) Patentinhaber: CLAAS Selbstfahrende Erntemaschinen GmbH, 33428 Harsewinkel (DE)
(72) Erfinder: Behnke, Willi, 33803 Steinhagen (DE); Diekhans, Norbert, Dr., 33335 Güterloh (DE); Huster, Jochen, 33330 Gütersloh (DE); Quincke, Gunnar, 59494 Soest (DE)

(56) Entgegenhaltungen:
- EP-A- 0 131 693
- EP-A- 0 666 018
- DE-A- 19 848 127

## Beschreibung

Die Erfindung bezieht sich auf eine Vorrichtung und ein Verfahren an einer selbstfahrenden landwirtschaftlichen Erntemaschine, insbesondere Feldhäcksler, die Erntegut von einem Bearbeitungsfeldstück aufnimmt, es bearbeitet und mittels einer Überladeeinrichtung an einen Transportbehälter übergibt, wobei mindestens die Überladerichtung der Überladeeinrichtung automatisiert veränderbar ist und die selbstfahrende landwirtschaftliche Erntemaschine mit einer Navigationseinrichtung, zur Ermittlung der Position der Erntemaschine auf dem Bearbeitungsfeld, sowie mit mindestens einer Speichereinrichtung, in die mindestens eine ermittelte Position der Erntemaschine abgespeichert werden kann, ausgestattet ist.

Feldhäcksler werden in der Landwirtschaft zur Zerkleinerung von Erntegut eingesetzt. Diese nehmen während des Erntevorgangs Erntegut von dem Bearbeitungsfeld auf, führen es einer Häckseleinrichtung zu und geben es dann mittels einer Überladeeinrichtung kontinuierlich an einen Transportbehälter ab. Die Überladeeinrichtung ist Bestandteil der selbstfahrenden Erntemaschine und besteht aus einem gekrümmten Rohr, welches das bearbeitete und zuvor beschleunigte Erntegut übernimmt, aus seiner annähernd senkrechten Richtung in eine annähernd waagerechte Richtung umlenkt und entsprechend seiner weiteren Einstellungen an den Transportbehälter übergibt. Die Überladeeinrichtung kann von dem Maschinenbediener der Erntemaschine um eine vertikale Achse ferngesteuert verdreht werden, so daß ein sich neben oder hinter der Erntemaschine befindlicher Transportbehälter befüllt werden kann. An der erntegutabgebenden Seite der Überladeeinrichtung befindet sich ein fernsteuerbares Leitelement zur Beeinflussung der relativen Abgaberichtung und Bestimmung der Überladeweite der Überladeeinrichtung. Die Höhe dieser Seite der Überladeeinrichtung kann von dem Maschinenbediener ferngesteuert, durch eine Verdrehen der gesamten Überladeeinrichtung um eine horizontale Verbindungsachse an der erntegutaufnehmenden Seite der Überladeeinrichtung, eingestellt werden.
Der Maschinenbediener der selbstfahrenden Erntemaschine hat während dem Erntebetrieb die Aufgabe, die Erntegutaufnahme, die Erntegutbearbeitung und den Überladeprozeß zu überwachen. Dies stellt hohe Anforderungen an den Maschinenbediener, zumal der Überladeprozeß nicht im unmittelbaren Blickfeld des Maschinenbedieners, welches üblicherweise der Erntegutaufnahmebereich ist, stattfindet.
Besonders schwierig gestaltet sich der Überladeprozeß für den Maschinenbediener dann, wenn das Erntegut entgegengesetzt der Fahrtrichtung, also nach hinten überladen wird. Der Überladeprozeß findet in diese Richtung besonders zu Beginn der Ernte eines neuen Bearbeitungsfeldes statt. Neben der selbstfahrenden Erntemaschine befindet sich dann für den Transportbehälter noch kein ausreichender, befahrbarer Bereich oder dort befindet sich ein noch unbearbeitetes Bearbeitungsfeldstück, welches nicht überfahren werden sollte. Zur Überwachung dieses Überladeprozesses muß dann der Maschinenbediener seine Aufmerksamkeit von dem Erntegutaufnahmebereich weg hin auf den in entgegengesetzter Richtung liegenden Überladebereich richten. Das Überladen in diese Richtung wird außerdem noch durch die große, notwendige Überladeweite über das Zugfahrzeug des Transportbehälters hinweg und durch die Befüllung des Transportbehälters von der schmalen Frontseite her erschwert. Schon eine geringe Abweichungen von der optimalen Überladerichtung der Überladeeinrichtung oder eine Unaufmerksamkeit des Maschinenbedieners verursacht, daß Erntegut neben den Transportbehälter überladen wird und verloren geht.
Das Einfahren in eine neue Bearbeitungsspur oder das Ernten während eines Wechsels der Bearbeitungsrichtung, beispielsweise beim Einfahren aus einer Geraden in eine Kurve, erfordern im Bereich der Erntegutaufnahme die volle Aufmerksamkeit des Maschinenbedieners. Wenn dann zusätzlich das Erntegut an einen nachfolgenden Transportbehälter überladen werden soll, stellt die gleichzeitige Überwachung der Überladeeinrichtung eine besonders hohe, zusätzliche Anforderungen an den Maschinenbediener dar.

Zur Entlastung des Maschinenbedieners sind beispielsweise an gezogenen Feldhäckslern Einrichtungen zur Steuerung der Überladeeinrichtung bekannt. Eine derartige Einrichtung wird beispielsweise in der EP 0 131 693 B1 offenbart. Die beschriebene Einrichtung bezieht sich auf einen gezogenen Feldhäcksler mit einem direkt angehängten, nachlaufenden Transportwagen. Mittels des Überladeeinrichtung wird das gehäckselte Erntegut von dem gezogenen Feldhäcksler auf den Transportwagen überladen. Der relative Winkel zwischen dem angehängten Transportwagen und dem gezogenen Feldhäcksler wir an der Koppelstelle anhand einer mechanisch abgreifenden Sensoreinheit erfaßt. Anhand dieses Winkels wird die Überladerichtung so gesteuert, daß das Erntegut immer in den Transportwagen trifft. Ferner wird der eingestellte, relative Winkel zwischen Überladeeinrichtung und gezogenem Feldhäcksler ermittelt und der Steuerung mitgeteilt.
Für die Verwendung dieser Einrichtung an selbstfahrenden Feldhäckslern ist es notwendig, daß der Transportbehälter direkt an die selbstfahrende Erntemaschine angehängt wird. Ist ein Transportbehälter gefüllt, muß er abgehängt und ein neuer leerer Transportbehälter angehängt werden. Dies führt zu heute nicht mehr akzeptierten Stillstandszeiten des Feldhäckslers. Daher wird in der Regel das Erntegut nur noch an selbstfahrende Transportwagen übergeben, eine mechanische Kopplung zwischen dem Transportwagen und dem selbstfahrenden Feldhäcksler ist daher nicht mehr möglich.
Des weiteren wirkt sich auch bei an den Feldhäcksler angehängten Transportwagen nachteilig aus, daß der relative Winkel zwischen dem Feldhäcksler und dem angehängten Transportwagen erfaßt werden muß. Dazu sind spielfreie mechanische Tastvorrichtungen mit hochauflösenden Abtastmitteln notwendig. Diese mechanischen Tastvorrichtung muß dann nach jedem Transportwagenwechsel erneut gekoppelt und justiert werden.

Es sind ferner Einrichtungen bekannt, die mittels optischer Abtastvorrichtung den relativen Winkel zwischen dem gezogenen Feldhäcksler und dem Transportbehälter abtasten. Jedoch muß dazu jeder Transportwagen mit entsprechenden Reflektormitteln ausgestattet sein. Bei der Verwendung von selbstfahrenden Transportbehältern besteht keine direkte Sichtverbindung zwischen dem Feldhäcksler und dem Transportwagen, da der Transportwagen in der Regel von einem Zugfahrzeug, welches sich dann zwischen Feldhäcksler und Transportwagen befindet, bewegt wird. Für die Überladung von Erntegut an ein nachfolgendes Transportfahrzeug ist diese Einrichtung daher nicht geeignet.

Weiterhin ist eine Vorrichtung zur automatisierten Steuerung der Überladeeinrichtung zur Befüllung von Ladebehältern aus der DE 44 03 893 bekannt. Hier wird eine Steuerung der Überladeeinrichtung beschrieben, bei welcher die Überladeeinrichtung anhand von an der Überladeeinrichtung angeordneten optischen oder akustischen Entfernungsmessern gesteuert wird. Der Befüllungsgrad des Transportbehälters und die relativen Positionen der Transportbehälterwandungen werden ermittelt. Anhand von Entfernungssignale zwischen der Überladeeinrichtung und dem momentanen Gutauftreffpunkt wird die Füllhöhe beziehungsweise der Befüllungsgrad des Transportbehälter ermittelt. Die Überladeeinrichtung wird dann, wenn an einer Stelle eine bestimmte Füllhöhe erreicht ist, so lange in eine Richtung verschwenkt, bis eine benachbarte Stelle erkannt wird, die eine geringere Füllhöhe aufweist. Ferner sind Mittel offenbart, die es ermöglichen, über fest an der Überladeeinrichtung positionierte Endschalterkontakte, vorgegebene Winkelstellungen des Auswurfkrümmers zur Längsrichtung der Erntemaschine direkt anzuwählen.
Diese Überladesteuerung hat den Nachteil, daß die Entfernungssensoren sehr teuer sind. Weiterhin arbeitet diese Vorrichtung nur zufriedenstellend wenn der Erntegutstrom etwa die Richtung der Entfernungsmeßeinrichtung besitzt. Dies ist bei einem etwa senkrecht zum Transportbehälterboden ausgerichteten Erntegutstrom der Fall. Wird das Erntegut auf einen an den selbstfahrenden Feldhäcksler angehängten oder von einen Zugfahrzeug hinter der Erntemaschine nachgezogenen Transportbehälter überladen, versagt diese automatische Überladesteuerung. Ursache dafür ist die Überladerichtung und große Überladeweite zwischen der Überladeeinrichtung und dem Transportbehälter. Das Erntegut wird zwar von der Überladeeinrichtung nahezu in der von einem Leitelement vorgegebenen Richtung abgegeben, verläßt diese Richtung aber mit zunehmender Überladeweite und trifft näher als vorgegeben in den Transportbehälter auf. Die Entfernungsmeßvorrichtungen arbeiten anhand der von der Überladeeinrichtung vorgegebenen Richtung. Durch die gekrümmte Wurfbahn des Erntegutes, sind der Auftreffpunkt des Erntegutes in den Transportbehälter und der von den Entfernungsmessern detektierte Bereich voneinander beabstandet. Hierdurch ist eine zufriedenstellende Steuerung der Überladeeinrichtung nicht mehr möglich.

Es ist nun Aufgabe der Erfindung, eine Vorrichtung beziehungsweise ein Verfahren für eine selbstfahrende landwirtschaftliche Erntemaschine, insbesondere für einen Feldhäcksler, zu schaffen, welche die aus dem Stand der Technik bekannten Mängel zumindest verringert und zusätzlich den Maschinenbediener entlastet.

Die Aufgabe wird durch eine Vorrichtung und ein Verfahren an einer selbstfahrenden landwirtschaftlichen Erntemaschine, insbesondere Feldhäcksler, dadurch gelöst, daß die Überladerichtung der Überladeeinrichtung in Abhängigkeit von zumindest zwei von der Navigationseinrichtung ermittelten voneinander beabstandeten Positionen der Erntemaschine ermittelt wird.
Die Vorrichtung eignet sich im Besonderen zur Befüllung von Transportbehältern, die bei der Befüllung der selbstfahrenden Erntemaschine selbstfahrend nachfolgen. Dabei geht man davon aus, daß sich der Transportbehälter auf der zurückliegenden Bearbeitungsspur der selbstfahrenden Erntemaschine befindet, eine Erfassung de tatsächlichen Lage ist vorteilhaft nicht erforderlich.
Aus der aktuellen Position der Antenne auf der Erntemaschine und der weiteren ausgewählten Position auf der zurückliegenden Bearbeitungsspur, wird dann erfindungsgemäß die Richtung der Strecke zwischen beiden Positionen ermittelt und die Überladerichtung von der Vorrichtung über beispielsweise einen hydraulischen Verstellantrieb auf diese Überladerichtung eingestellt. Die Ausrichtung der Erntemaschine in einem relativen oder im terrestrischen Bezugsystem wird beispielsweise aus der Bearbeitungsrichtung anhand der aktuellen und der vorherigen abgespeicherten Position der Erntemaschine bestimmt. Ferner besteht die Möglichkeit die Ausrichtung der Erntemaschine zum Bezugssystem anhand bekannter Richtungsmesseinrichtungen beispielsweise anhand eines Kompasses zu ermitteln. Die relative Überladerichtung der Überladeeinrichtung zur Bearbeitungsrichtung der Erntemaschine, kann durch entsprechende Sensoren an der vertikalen Drehachse der Überladeeinrichtung ermittelt und der Vorrichtung zur Verfügung gestellt werden.

Die Vorrichtung hat den Vorteil, dass sie völlig unabhängig von den zu beladenden Transportbehältern arbeitet. Es werden daher keine zusätzlichen Sensoren benötigt, welche die Abmessungen der Transportbehälter oder bestimmte weitere Abstände zwischen den Transportbehältern und der selbstfahrenden Erntemaschine ermitteln. Auch benötigen die selbstfahrenden Transportbehälter vorteilhaft keine spezielle Ausstattungen, wie optische Reflektoren. Zur Funktion der automatischen Steuerung der Überladeeinrichtung ist es lediglich notwendig, beispielsweise den selbstfahrenden Feldhäcksler mit der erfindungsgemäßen Vorrichtung zu Ermittlung der Überladerichtung auszustatten. Eine Navigationseinrichtung mit ausreichender Auflösung, beispielsweise eine bekannte DGPS- Satellitennavigationseinrichtung und entsprechende elektrohydraulische Verstellantriebe für die Überladeeinrichtung sind schon teilweise auf den selbstfahrenden Feldhäckslem vorhanden und können problemlos erweitert oder nachgerüstet werden.

Vorteilhaft ist die Ermittlung der Überladerichtung in Verbindung mit einer zusammenhängenden Bearbeitungsspur, die aus den in der Speichereinrichtung abgespeicherten, zurückliegenden Positionen ermittelt wird. Hierdurch können dann an jeder Stelle, auf der zurückliegenden Bearbeitungsspur der Erntemaschine, die gewünschten Positionen ausgewählt werden. Hierdurch ergibt sich der weitere Vorteil, daß zusätzlich der Abstand zwischen der Antennen und der vertikalen Drehachse bei der Ermittlung der Überladerichtung berücksichtigt werden kann. Die Ermittlung der Überladerichtung wird dadurch annähernd aus der Richtung einer Strecke abgeleitet, die der gewünschten Überladerichtung entspricht. Dies führt zu sehr geringen Berechnungsaufwendungen und zu einer kurzen Berechnungszeit. Die Überladeeinrichtung kann somit vorteilhaft sehr schnell auf eine neu ermittelte Überladerichtung eingestellt werden.

Vorteilhaft wird zur weiteren Verbesserung der Einstellung der Überladerichtung eine bekannte Satellitennavigationseinrichtung, beispielsweise eine bekannte GPS-Navigationseinrichtung verwendet. Diese Navigationseinrichtungen haben den Vorteil, daß sie direkt an die Erntemaschine angebaut werden können und eine ausreichende Genauigkeit besitzen, sodass sie ohne zusätzliche, auf dem Bearbeitungsfeld zu installierende Einrichtungen auskommen. Es sind weitere Einrichtung zur Verbesserung der Genauigkeit der Satellitennavigationseinrichtung, wie beispielsweise die Korrektur der Satellitenpositionen durch die Einbeziehung von mindestens eines Referenzpunktes und die weitere Einbeziehung der Phasenverschiebung der Signale bekannt. Hierdurch lassen sich dann Genauigkeiten der Navigationseinrichtungen im Zentimeterbereich erzielen. Die aktuellen und die abgespeicherten Positionen zur Berechnung der Überladerichtung sind daher mit nur sehr geringen Fehlern behaftet. Dies hat den Vorteil, daß jeweils die aktuelle Position der Erntemaschine und die abgespeicherte Position sehr genau und die bekannten Schwankungen in der Genauigkeit des GPS- Systems zwischen den einzelnen, abgespeicherten Positionen gering sind. Es lassen sich daher sehr zuverlässige, genaue Richtungssignale für die Überladeeinrichtung ableiten.

In einer weiteren Ausgestaltung der Erfindung wird die Navigationsantenne direkt auf oder nahe der vertikalen Drehachse der Überladeeinrichtung angeordnet. Die vertikale Drehachse der Überladeeinrichtung befindet sich in der Regel hinter der Fahrerkabine. Die Antennenposition läßt sich daher für eine verbesserte Ermittlung der Überladerichtung, durch eine Anbringung an der der Überladeeinrichtung zugewandten Seite der Fahrerkabine, verbessern, indem die aktuelle Position der Erntemaschine direkt zur Ermittlung der Richtung der Strecke zwischen der Position in der Nähe des vertikalen Drehpunktes der Überladeeinrichtung und der weiteren Position in der Nähe des Transportbehältermittelpunktes verwendet werden kann. Der Berechnungsaufwand wird vorteilhaft vermindert und die Genauigkeit der ermittelten Überladerichtung weiter verbessert. Ferner erbringt diese Anordnung den Vorteil, dass Bewegung der Erntemaschine um die jeweilige Längs-, Quer-, und Hochachse direkt, durch entsprechende Positionsänderung, erkannt und unmittelbar (ohne Korrektur) in eine entsprechende Korrektur der Überladerichtung umgerechnet werden können. Auf weitere Sensoren, die die verschiedenen Bewegungen der Erntemaschine ermitteln, kann dann vorteilhaft verzichtet werden. Die optimal Anbringungsposition der Antenne auf der Erntemaschine ist die direkte Anbringung auf der vertikalen Drehachse der Überladeeinrichtung. Die aktuell ermittelte Position ist dann vorteilhaft auch gleichzeitig exakt die Position der vertikale Drehachse der Überladeeinrichtung. Hierdurch wird ein Position an der Erntemaschine ermittelt, welcher direkt ein Lage der Überladeeinrichtung angibt und unabhängig von der Ausrichtung der Längsachse sowie von Bewegung der Erntemaschine in die Berechnung der Überladerichtung verwendet werden kann. Eine sehr genaue Ermittlung der Richtung ist somit gegeben.

In einer weiteren Ausgestaltung der Erfindung, wird an der Überladeeinrichtung eine weitere Navigationseinrichtung, beabstandet von der vertikalen Drehachse der Überladeeinrichtung, angebracht. Vorteilhaft ist die weitere Navigationsantenne an der gutabgebenden Seite der Überladeeinrichtung angebaut, wodurch dann die Überladerichtung direkt im Bezugsystem ermittelt werden. Befindet sich die erste Navigationseinrichtung außerdem in der Nähe oder direkt auf dem vertikalen Drehpunkt der Überladeeinrichtung, so entspricht die Richtung der Strecke zwischen den beiden Positionspunkten der momentanen Überladerichtung. Auf eine Ermittlung der momentanen Ausrichtung der Erntemaschine im Bezugsystem und eine entsprechende Berechnung der Überladerichtung, in Verbindung mit dem Winkelsensorwert an der Verbindungsstelle der Überladeeinrichtung zur Erntemaschine, kann vorteilhaft gänzlich verzichtet werden. Die Berechnung der Überladerichtung kann somit direkt anhand von zwei Antennenpositionen und einer zurückliegenden, abgespeicherten Position im terrestrischen Bezugsystem durchgeführt werden. Anhand einer in der Speichereinrichtung abgespeicherten Position, der aktuellen Position der vertikalen Drehachse und der weiteren Position der Überladeeinrichtung, kann eine Regelung der Überladerichtung erfindungsgemäß erfolgen.

In einer bevorzugten Ausgestaltung der Erfindung wird das Abspeichern und/oder das Abrufen von wenigstens einer Position in und/oder aus der Speichereinrichtung in Abhängigkeit von wenigstens einer vorgegebenen Abmessung oder Fahrstrecke der Erntemaschine durchgeführt.
Vorteilhaft werden die Position unabhängig der Fahrgeschwindigkeit der Entemaschine in die Speichereinrichtung abgelegt. Wodurch die Positionspunkte der Erntemaschine auf der zurückliegenden Bearbeitungsspur mit voneinander gleichmäßigen Abständen erzeugt abgespeichert werden. Der gleichmäßige Abstand kann beispielsweise aus dem Signal zur Ermittlung der Fahrgeschwindigkeit abgeleitet werden. Verschiedene Einrichtung, wie Drehzahlsensoren an den Radantrieben, an den Achsgetrieben oder auch Radarsensoren sind hierfür bekannt. Ferner kann der Abstand auch direkt aus der Entfernung zwischen der zuletzt abgespeicherten Position und der aktuellen Position ermittelt werden. Eine neue Position wird immer dann in der Speichereinrichtung abgespeichert, wenn die Erntemaschine eine bestimmte Wegstrecke überfahren hat.
Der Abstand zwischen zwei voneinander beabstandeten, abgespeicherten Positionspunkten kann prinzipiell frei gewählt werden. Vorteilhaft wird aber der Abstand zwischen der Navigationsantenne und der vertikalen Drehachse der Überladeeinrichtung oder ein Teilstrecke zwischen der vertikalen Drehachse der Überladeeinrichtung und dem gewünschten Auftreffpunkt des Erntegutes auf den Transportbehälter, die sogenannte Überladeweite, verwendet. Hierdurch läßt sich vorteilhaft der Berechnungsaufwand für die automatische erfindungsgemäße Einstellung der Überladeeinrichtung vereinfachen. Ferner lässt sich der in der Speichereinrichtung notwendige Speicherplatz läßt sich hierdurch minimieren.
Besonders vorteilhaft ist, wenn die Vorgabe des Abstandes zum wegabhängigen Abspeichern der aktuellen Position der Erntemaschine, aus der Entfernung zwischen der Navigationsantenne und der vertikalen Drehachse der Überladeeinrichtung und aus der Entfernung zur Auswahl der weiteren, abgespeicherten Position abgeleitet wird, insbesondere dann wenn die Entfernung zur Auswahl der weiteren, abgespeicherten Position so ausgewählt wird, daß sie einer Vielfachen der Entfernung zwischen der Navigationsantenne und der vertikalen Drehachse der Überladeeinrichtung entspricht. Bei der Auswahl der Positionen der Erntemaschine auf der zurückliegenden Bearbeitungsspur zur Berechnung der Überladerichtung aus der Speichereinrichtung, können dann auf eine entsprechende Berechnung der Abstände zwischen den einzelnen, benachbarten, abgespeicherten Positionen und auf eine Interpolation, zur Berechnung einer dazwischenliegenden Position verzichtet werden, da in den entsprechenden Entfernungen von der aktuellen Position aus, bei der Auswahl der Positionen zur Berechnung der Überladerichtung, abgespeicherte Positionen vorhanden sind.

Erfindungsgemäß läßt sich die Vorrichtung dahingehend ausgestalten, daß die jeweilige, aktuelle Position der selbstfahrenden Erntemaschine in Verbindung mit einer entsprechenden Information über den Status der Erntegutaufnahmeeinrichtung abgespeichert wird. Dabei ist es vorgesehen, die jeweilige, zu speichernde Position der Erntemaschine auf dem Bearbeitungsfeld mit einer Information zu versehen. Anhand dieser Information kann vorteilhaft erkannt werden, ob die Erntemaschine zum Zeitpunkt der Positionsermittlung, Erntegut von dem Bearbeitungsfeld aufgenommen hat. Diese Information läßt sich aus der relativen Lage der Erntegutaufnahmeeinrichtung zur Erntemaschine oder aus dem Status der Antriebseinrichtung für die Erntegutaufnahmeeinrichtung beziehungsweise aus beiden Informationen ableiten. Eine verbesserte Funktion der erfindungsgemäßen Vorrichtung wird erreicht, indem für die Berechnung der Überladerichtung nur solche Positionsdaten verwendet werden, bei denen die Erntegutaufnahmeeinrichtung Erntegut von dem Bearbeitungsfeld aufgenommen hat. In einer weiteren Ausgestaltung der Erfindung kann dann, wenn kein Erntegut von der Erntegutaufnahmeeinrichtung von dem Bearbeitungsfeld aufgenommen wird, generell das Abspeichern von Positionen in die Speichereinrichtung oder die automatische Steuerung der Überladeeinrichtung unterbunden werden. Für die erfindungsgemäße Ermittlung der Überladerichtung ergibt sich hierdurch der besondere Vorteil, daß die abgespeicherten Positionsdaten nach bestimmten Kriterien für die Ermittlung der Überladerichtung ausgewählt werden können. Die Bewegung der Erntemaschine, beispielsweise von dem Ende einer Bearbeitungsspur zur einer neuen Bearbeitungsspur mit angehobener Erntegutaufnahmeeinrichtung, kann somit von einer Bewegung der Erntemaschine mit gleichzeitiger Aufnahmen von Erntegut unterschieden werden. Es kommt vor, daß die Erntemaschine, beispielsweise von einer Bearbeitungsspur zu einer nachfolgenden richtungsveränderten Bearbeitungsspur, eine Schleife fährt, der Transportbehälter wartet aber am Ende der zuletzt abgeernteten Bearbeitungsspur so lange bis die Erntemaschine das Ernten auf der neuen Bearbeitungsspur aufgenommen hat und fährt dann direkt, der Erntemaschine folgend, in die neue Bearbeitungsspur ein. Nimmt nun die Erntegutaufnahmeeinrichtung am Ende der Bearbeitungsspur kein Erntegut mehr auf und wird die Erntegutaufnahmeeinrichtung von dem Maschinenbediener ausgehoben und/oder schaltet er den Antrieb für dieselbe ab, so erhalten alle danach abgespeicherten Positionen der Erntemaschine diese Information.
Die Überladerichtung wird nach der erfindungsgemäßen Ausgestaltung der Vorrichtung dann so lange gesteuert, bis keine Positionsdaten mehr mit einer entsprechenden Erntegutaufnahmeinformation, für eine entsprechenden Auswahl für die Ermittlung der Überladerichtung, zur Verfügung stehen. Dieses bedeutet, daß sich die aktuelle Position der Erntemaschine von einer abgespeicherten Position mit einer Information, das Erntegut aufgenommen wird, mindestens die vorgegebenen Entfernung zur Auswahl der Position aus der Speichereinrichtung entfernt hat. Die aktuelle Überladerichtung wird dann nicht mehr neu berechnet und eine automatische Einstellung der Überladerichtung findet nicht mehr statt. Hat aber die Erntemaschine dann die neue Bearbeitungsspur erreicht und nimmt die Erntemaschine erneut Erntegut von dem Bearbeitungsfeld auf, werden die aktuellen Positionsdaten der Erntemaschinen wieder beziehungsweise wieder mit der Information, daß Erntegut aufgenommen wird, in der Speichereinrichtung abgespeichert. Die Berechnung und Steuerung der Überladerichtung wird dann anhand der erfindungsgemäßen Vorrichtung und Verfahren fortgeführt. Dies hat den besonderen weiteren Vorteil, daß die Vorrichtung zur Steuerung der Überladeeinrichtung auch nach der Beendigung der Erntegutaufnahme noch auf der Länge einer bestimmten Fahrstrecke, nämlich die vorgegebenen Entfernung zur Auswahl der zurückliegenden Position aus der Speichereinrichtung, aktiviert bleibt und erst dann, wenn gewöhnlich auch kein Erntegut mehr an einen Transportbehälter übergeben wird, die automatische Steuerung der Überladeeinrichtung unterbleibt. Diese stellt eine Entlastung des Maschinenbedieners dar, da eine Aktivierung beziehungsweise Deaktivierung der Vorrichtung bei einem Wechsel der Bearbeitungsspur vorteilhaft entfallen kann.

In einer weiteren Ausgestaltung der Erfindung, wird die Auswahl der in der Speichereinrichtung zurückliegenden, abgespeicherten Position der Erntemaschine anhand der vorgegebenen Überladeweite der Überladeeinrichtung vorgenommen. Die Überladeweite wird so vorgegeben, daß sie etwa der Entfernung zwischen der vertikalen Drehachse der Überladeeinrichtung und des gewünschten Auftreffpunktes des Erntegutstromes auf den Transportbehälter entspricht. Die Überladeweite kann dem Maschinenbediener angezeigt werden und ist vorteilhaft vom Maschinenbediener veränderbar. Durch die einstellbare Überladeweite hat er somit die Möglichkeit, die Auswahl der auf der Bearbeitungsspur der Erntemaschine zurückliegenden, abgespeicherten Position zur Berechnung der Überladerichtung, zu beeinflussen. Die Vorgabe der Überladeweite kann vom Maschinenbediener, beispielsweise in der Fahrerkabine an einer Bedienerkonsole, durch eine skalierte Potentiometereinstellung vorgenommen werden. Hierdurch erhält der Maschinenbediener der selbstfahrenden Erntemaschine die Möglichkeit, die Überladerichtung an unterschiedliche Transportfahrzeuge anzupassen. Dies ist dann besonders erforderlich, wenn sich die in der Transportkette befindlichen Transportbehälter in ihrer Größe und in der Art des Antriebes (selbstfahrend oder gezogen) stark voneinander unterscheiden. Der Maschinenbediener kann ferner die Überladeweite manuell so lange verstellen, bis die erfindungsgemäße Vorrichtung die gewünschte Überladerichtung automatisch einstellt, d.h. aus der Speichereinrichtung werden dann in Verbindung mit der Überladeweite, eine Position zur Berechnung der Überladerichtung ausgewählt, die näher an oder weiter von der vertikalen Drehachse auf der zurückliegenden Bearbeitungsspur der Erntemaschine liegt.

In einer weiteren die Ausgestaltung der Erfindung, wird bei der Berechung der Überladerichtung und/oder der Überladeweite Einstellparametern der Überladeeinrichtung und gegebenenfalls auch auf die Überladung Einfluß nehmende Parameter berücksichtigt. Die Überladeeinrichtung kann durch verschiedene Einstellmöglichkeiten an den Überladeprozeß angepaßt werden. An der erntegutabgebenden Seite der Überladeeinrichtung befindet sich beispielsweise ein fernsteuerbares Leitelement, die Überladeklappe. Diese dient der Beeinflussung der relativen Überladerichtung beziehungsweise der Überladeweite der Überladeeinrichtung. Die gesamte Überladeeinrichtung kann ferner um eine horizontalen Achse an der erntegutaufnehmenden Seite von dem Maschinenbediener ferngesteuert verschwenkt werden. Dadurch wird die relative Höhe der gutabgebenden Seite der Überladeeinrichtung und in Verbindung damit auch die Überladehöhe und -richtung der Überladeeinrichtung eingestellt. Eine veränderte Abgaberichtung von Erntegute an der erntegutabgebenden Seite der Überladeeinrichtung, kann durch eine Verstellung der Überladeklappe oder der Überladehöhe bewirkt werden. Die jeweilige relative Stellung der Überladeklappe zur Überladeeinrichtung und die der Überladeeinrichtung zur Erntemaschine kann jeweils durch eine einfache Winkelmessung erfaßt werden. Aus den bekannten Abmessungen der Erntemaschine und den jeweiligen Parametern der Überladeeinrichtung kann dann eine theoretische Überladeweite berechnet und für die Auswahl der auf der zurückliegenden Bearbeitungsspur liegenden Position aus der Speichereinrichtung zur Berechnung der Überladerichtung verwendet werden. Dies stellt auch eine weitere Verbesserung bei der Ermittlung der Überladerichtung dar, da die variablen Einstellparameter der Überladeeinrichtung erkannt und in die Berechnung der Überladerichtung mit einfließen. Die tatsächliche Überladeweite kann von weiteren Einflüßen beeinflusst werden. Sie wird beispielsweise auch von der Erntegutgeschwindigkeit, den Ernteguteigenschaften, wie die Erntegutart, die Erntegutfeuchte, die Häcksellänge und von dem momentanen Befüllungsgrad des Transportbehälters beeinflußt. Einen weiteren Einfluß üben die geografischen Beschaffenheiten des Bearbeitungsfeldes, durch die sich dadurch verändernden Neigungen und Höhenlagen der Erntemaschine gegenüber dem Transportbehälter, auf die momentane Überladeweite aus. Diese Einflußgrößen lassen sich teilweise aus weiteren Einstellparametern der Erntemaschine direkt ableiten, direkt gemessen oder aus Messungen und Parametern abgeleitet werden. Die vorteilhafte Einbeziehung in die Berechnung des theoretischen Auftreffpunktes von Erntegut auf den Transportbehälter ermöglichen eine automatische exakte Steuerung der Überladeeinrichtung.
Ein weiterer auf die Überladung Einfluß nehmender Parameter ist der Windeinfluß. Dieser wird vorteilhaft bei der Ermittlung der Einstellung der Überladeeinrichtung, wie Überladeweite und Überladerichtung, berücksichtigt. Bei der Überladung von Erntegut auf einen der Erntemaschine nachfolgenden Transportbehälter wird das Erntegut über eine größeren Teil des Überladeweges frei durch die Luft überladen. Bei einer Anbringung der Windmeßeinrichtung auf der Erntemaschine, kann die gemessene Windrichtung über den relativen Winkel der Überladeeinrichtung zur Längsrichtung der Erntemaschine, auf die das Erntegut ablenkende Windrichtung umgerechnet werden. Als besonders vorteilhaft hat sich aber herausgestellt, die Einrichtung zur Ermittlung des Windeinflußes derart mit der Überladeeinrichtung zu verbinden, daß die relative Windstärke und -richtung zur Überladeeinrichtung ermittelt wird. Diese Verbesserung wird durch eine direkte Anbringung der Windmeßeinrichtung an der Überladeeinrichtung erreicht. Vorteilhaft ist die Anbringung der Windmeßeinrichtung vor Beschädigungen geschützt unterhalb der Überladeeinrichtung. Eine entsprechende Halterung kann außerdem für eine lotgerechte Ausrichtung sorgen.

In einer Weiterbildung der Erfindung, steht die Vorrichtung mit einer in einer Speichereinrichtung hinterlegten, digitalen Bearbeitungsfeldkarte in Verbindung. In der Bearbeitungsfeldkarte können schon vor der Bearbeitung des Bearbeitungsfeldes die Bearbeitungsgrenzen, Hindernisse ( Bäume, Strommasten oder Gräben ) und nicht befahrbare Bereiche außerhalb und innerhalb des Bearbeitungsfeldes angegeben sein. Ferner kann beim Abernten des Bearbeitungsfeldes die abgeerntete Fläche aufgezeichnet und in der Bearbeitungsfeldkarte angezeigt werden. In Verbindung mit der aktuellen Position der Erntemaschine auf dem Bearbeitungsfeld, kann dann die erfindungsgemäß Vorrichtung nach einem erfindungsgemäßen Verfahren automatisch aktiviert werden, wenn aus den vorhandenen Informationen erkannt wird, daß eine bevorstehende Überladung von Erntegut auf einen Transportbehälter nur in Richtung der zurückliegenden Bearbeitungsspur der Erntemaschine möglich ist. Die Erntemaschine kann mit noch weiteren Vorrichtungen zur automatischen Steuerung der Überladeeinrichtung ausgestattet sein. Beispielsweise ist auf der Erntemaschine eine Vorrichtung für die Überladung von Erntegut bei Parallelfahrt von Transportbehälter und Erntemaschine und eine Vorrichtung zur Steuerung der Überladeeinrichtung bei der Überladung von Erntegut auf einen der Erntemaschine folgenden Transportbehälter vorhanden sein. Die Aktivierung der Vorrichtung und ein Wechsel der aktivierten Steuerung, kann vorteilhaft durch ein optisches Mittel und bei der Aktivierung oder bei einem Wechsel der verwendeten Vorrichtung durch ein kurzzeitiges, akustisches Signal angezeigt werden.
In der Fahrerkabine der Erntemaschine kann ferner ein Monitor angebracht sein, auf welchem der Maschinenbediener die Bearbeitungsfeldkarte mit den entsprechenden Kennzeichnungen, zum Beispiel die aktuelle Position der Erntemaschine, die Überladeeinrichtung mit der momentanen Überladerichtung und die einzelnen abgespeicherten, zurückliegenden Positionen der Erntemaschine angezeigt bekommen und somit laufend den Ernteprozeß verfolgen.

In einer weiteren Ausgestaltung der Erfindung, wird die durch den Maschinenbediener durchgeführte manuelle Korrektur der Überladeeinrichtung, so lange als Korrekturwert bei der Ermittlung der Überladerichtung berücksichtigt, bis die Vorrichtung ein erneutes Aktivierungssignal erhält. Hierdurch wird vorteilhaft erreicht, daß die Überladeeinrichtung, nach einer manuellen Korrektur, nicht automatisch von der Vorrichtung, bei der nächsten Neuberechnung der Überladerichtung, um den zuvor korrigierten Betrag zurückgeschenkt wird.

Die Erfindung soll anhand der folgenden Zeichnungen näher erläutert werden. Es zeigen:
- Figur 1 einen selbstfahrenden Feldhäcksler in der Seitenansicht,
- Figur 2 einen selbstfahrenden Feldhäcksler mit einem nachfolgenden Transportbehälter, im Längsschnitt durch eine Bearbeitungsspur,
- Figur 3 einen selbstfahrenden Feldhäcksler mit einem nachfolgenden Transportbehälter auf einem Bearbeitungsfeld mit eingezeichneten zurückliegenden Positionen der Erntemaschine.
- Figur 4 einen schematischen Aufbau der Vorrichtung zur Steuerung der Überladerichtung.

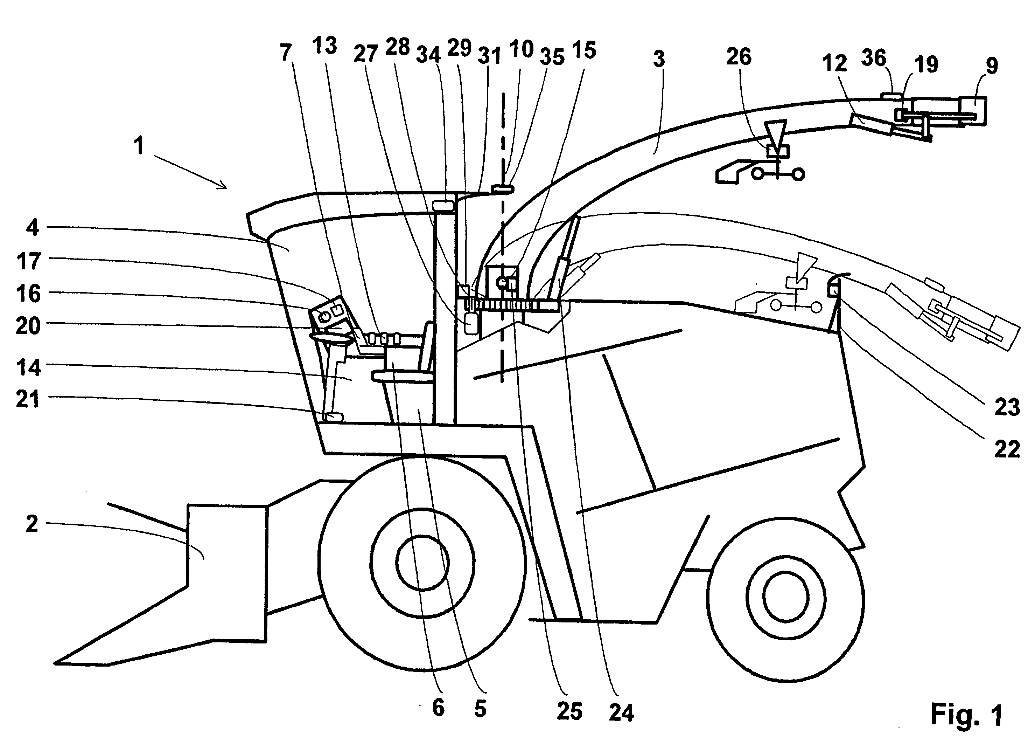

In der Figur 1 wird ein selbstfahrender Feldhäcksler 1 in einer Seitenansicht dargestellt. Dieser nimmt über die Erntegutaufnahmeeinrichtung 2 Erntegut von dem Bearbeitungsfeld auf, zerkleinert es und gibt es mittels der Überladeeinrichtung 3 an einen Transportbehälter ab. Der Feldhäcksler 1 besitzt eine Fahrerkabine 4, in welcher sich ein Sitz 5 mit einem an der Armlehne 6 angebrachten Multifunktionsgriff 7 befindet. Der Multifunktionsgriff 7 ist mit mehreren Bedientasten und -schaltern ausgestattet, mittels welchen der Maschinenbediener die Funktionsweise des Feldhäckslers 1 ferngesteuert beeinflussen kann. Er kann hiermit beispielsweise die Erntegutaufnahmeeinrichtung 2 in seiner Höhe zum Bearbeitungsfeld einstellten, die Überladeeinrichtung 3 um die vertikalen Drehachse 10 verschwenken, die Richtung der Überladeklappe 9 steuern oder die Höhe der Überladeeinrichtung 3 um die horizontale Drehachse 15 verändern. Rechts neben dem Sitz 5 befindet sich eine Bedienerkonsole 14. An dieser befinden sich weitere Bedienelemente, wie Schalter 13, Drehelemente (Potentiometer) 16, Anzeigeelemente (Leuchten) 17 und bei Bedarf auch einen Monitor 20 oder eine oder mehrere LCD-Anzeigen. Auf dem Fahrerkabinenboden befindet sich ein weiteres Bedienelement ausgebildet als ein Fußtaster 21 zur Aktivierung beziehungsweise zur Deaktivierung der erfindungsgemäßen Vorrichtung. In der Bedienerkonsole 14 kann sich ferner eine nicht näher dargestellt Auswerteelektronik befinden. Über die einzelnen Bedienelemente 7,13,16 kann der Maschinenbediener die Einstellungen des Feldhäckslers 1 direkt oder mittels elektrohydraulischer Stellantriebe verändern. Die gutabgebende Seite der Überladeeinrichtung 3, kann von dem Maschinenbediener beispielsweise durch die Betätigung eines Schalters 13 an der Bedienkonsole 14, in seiner relativen Lage zum Feldhäcksler 1 verändert werden. Das bei der Betätigung des Schalters 13 erzeugten Schaltersignals steuert ein Hydraulikventil, welches dann beispielsweise eine Ölmenge an den Hydraulikzylinder 24 abgibt und somit die Höhe der Überladeinrichtung 3 verändert. In der Figur 1 sind zwei verschiedene Stellungen der Überladeeinrichtung 3 dargestellt. Eine Arbeitsstellung und eine Transportstellung. Für die Transportfahrt des Feldhäckslers 1, wird die Überladeeinrichtung 3 in die Transportstellung abgesenkt und auf einem Bügel 22 abgelegt. Diese Stellung der Überladeeinrichtung 3 wird von einem Schalter 23 erfasst und an die Auswerteelektronik gemeldet. An der horizontalen Drehachse 15 der Überladeeinrichtung 3 befindet sich ein Sensor 25, der die relative Stellung der Überladeeinrichtung 3 zum Feldhäcksler 1 ermittelt. Die Stellung der Überladeklappe 9 wird von der Stellung des Hydraulikzylinders 12 vorgegeben und mittels eines Sensors 19 erfaßt. Durch beispielsweise einen Taster an dem Multifunktionsgriff 7, kann der Maschinenbediener die Richtung der Überladeklappe 9 manuell verändern. Die von den Sensoren 19 und 25 erfasste, jeweilige Stellung der Überladeeinrichtung 3 beziehungsweise der Überladeklappe 9, wird an die Auswerteelektronik 30 übertragen. Diese kann dann, in Verbindung mit der bekannten Höhe der horizontalen Drehachse 15 über dem Bearbeitungsfeld 40 und den weiteren Abmessungen der Überladeeinrichtung 3, eine theoretische Überladeweite ermitteln und über den Monitor 20 oder eine entsprechende LCD-Anzeige 17 dem Maschinenbediener anzeigen beziehungsweise für die automatische Steuerung der Überladerichtung 3 auswerten. Ferner kann die Überladerichtung der Überladeeinrichtung 3, d.h. die relative Ausrichtung der Überladeeinrichtung 3 zur Längsachse 56 des Feldhäckslers 1 in der Ebene, von dem Maschinenbediener beispielsweise durch einen Tasterdruck auf einen Taster an dem Multifunktionsgriff 7 ferngesteuert, verändert werden. Die Überladerichtung wird dann, je nach Richtungswunsch des Maschinenbedieners, mittels einer entsprechenden Ansteuerung des Hydraulikantriebes 27, dessen Abtrieb in einen Zahnkranz 28 eingreift, um die vertikale Drehachse 10 verschwenkt. Ein Sensor 29 erfasst die jeweilige eingestellte Überladerichtung der Überladeeinrichtung 3.
Die aktuelle Position des Feldhäckslers 1 auf dem Bearbeitungsfeld 40, wird mittels einer Navigationseinrichtung 61 ermittelt. In der Figur 1 wird als eine Navigationseinrichtung 61 eine Satellitennavigationseinrichtung gezeigt. An der Fahrerkabine 4 ist rückwärtig auf einem Halter 31 eine sogenannte GPS- Antenne 35 direkt auf der vertikalen Drehachse 10 der Überladeeinrichtung 3 angeordnet. Eine weitere GPS-Antenne 36 wird hier an der gutabgebenden Seite der Überladeeinrichtung 3 angebracht gezeigt. Der selbstfahrende Feldhäcksler 1 ist, je nach Ausstattungsgrad, auch mit mindestens einer weitere Einrichtung, zur Ermittlung der Ausrichtung des Feldhäckslers 1 in einem Bezugsystem, beispielsweise mit einem elektronischen Kompaß 34 ausgestattet. Diese Einrichtung kann durch weitere Einrichtungen zur Ermittlung von Bewegungen und Ausrichtungen des Feldhäckslers 1 auf dem Bearbeitungsfeld 40, wie Neigungs- oder Beschleunigungssensoren, erweitert werden. An der Überladeeinrichtung 3 ist ferner eine Windmesseinrichtung 26, beispielsweise frei pendelnd, angebaut. Hierdurch lässt sich der relative Windeinfluß auf das Erntgut bei der Überladung ermitteln und kann dann bei der Berechnung der Überladeweite oder der automatischen Ausrichtung der Überladeeinrichtung 3 Berücksichtigung finden.
Die Auswerteelektronik 30 kann mit den weiteren Elektroniksteuerungen in dem selbstfahrenden Feldhäcksler 1, beispielsweise über ein Fahrzeugbussystem 62 in Verbindung stehen. Weiteren Informationen über die Einstellungen des selbstfahrenden Feldhäckslers 1, beispielsweise die Stellung der Erntegutaufnahmeeinrichtung 2, den Status der einzelnen Antriebseinrichtungen oder über Arbeitsparameter, wie beispielsweise die Fahrgeschwindigkeit, den Erntegutdurchsatz oder die Erntegutfeuchte, können durch Sensoren in dem Feldhäcksler 1 ermittelt und der Auswerteelektronik 30 über das Bussystem 62 zur Verfügung gestellt werden.
Auf dem selbstfahrenden Feldhäcksler 1 kann ferner ein hier nicht speziell dargestelltes Computersystem 63 installiert sein. Dieses wertet die einzelnen Parameter des Feldhäckslers 1 aus und stellt sie dann grafisch auf einer LCD- Anzeige 17 oder dem Monitor 20 dar. In dieses Computersystem 63, kann auch vor dem Beginn der Bearbeitung des Bearbeitungsfeldes eine Bearbeitungsfeldkarte abgespeichert werden. Mittels der Navigationseinrichtung 61 kann dann die relative Position der Erntemaschine 1 zu dem besagten Bearbeitungsfeld 40 von dem Computersystem 63 ermittelt und bei einer Annäherung des selbstfahrenden Feldhäckslers 1 an das neue Bearbeitungsfeld, die hinterlegte Bearbeitungsfeldkarte automatisch ausgewählt und zumindest teilweise oder auch komplett auf dem Monitor 20 angezeigt werden. Vor der Bearbeitung des Bearbeitungsfeldes schwenkt der Maschinenbediener normalerweise die Überladeeinrichtung 3 aus der Transportstellung in ein Arbeitsstellung. Diese kann aber auch erfindungsgemäß automatisch erfolgen, indem die erfindungsgemäße Vorrichtung automatisch dann aktiviert wird, wenn der selbstfahrende Feldhäcksler 1 sich unmittelbar an der Bearbeitungsfeldgrenze befindet und der Maschinenbediener den beabsichtigten Arbeitsbetrieb des Feldhäckslers anzeigt. Dies wird beispielsweise daran erkannt, dass der Maschinenbediener zumindest ein Arbeitsaggregat, wie die Häckseltrommel beziehungsweise die Erntegutaufnahmeeinrichtung 2 einschaltet. Die Überladerichtung 3 wird dann automatisch auf die zurückliegende Anfahrstrecke des selbstfahrenden Feldhäckslers 1 zum Bearbeitungsfeld hin erfindungsgemäß ausgerichtete. In der Regel liegen jedoch in der Speichereinrichtung 37 noch keine für die erfindungsgemäße Verwendung abgespeicherten Positionen 50,51 vor, so daß zu Beginn der Bearbeitung des Bearbeitungsfeldes 40 die Überladeeinrichtung 3 manuell auf den Transportbehälter 47 ausgerichtet werden muß. Nimmt der selbstfahrende Feldhäcksler 1 dann Erntegut 41 von dem Bearbeitungsfeld auf, werden erfindungsgemäß aktuelle Positionen des Feldhäckslers 1 in die Speichereinrichtung 37 abgespeichert. Als ein Aktivierungssignal zur Speicherung der aktuellen Position 49, kann ein Wegsignale, beispielsweise im Abstand der Entfernung zwischen der Navigationsantenne 35 und der vertikalen Drehachse 10 dienen. Hat nun der Feldhäcksler 1 auf einer Strecke, die ungefähr der Überladeweite entspricht, Erntegut 41 von dem Bearbeitungsfeld 40 aufgenommen, befinden sich in der Speichereinrichtung 37 mehrere, abgespeicherte Positionen 50,51 des Feldhäckslers 1 mit eventuell der zusätzlichen Information, daß Erntegut 41 aufgenommen worden ist. Die zuerst abgespeicherte Position 51 befindet sich nun ungefähr eine Überladeweite entfernt von der aktuellen Position 49,50 des Feldhäckslers 1 zurückliegen auf der Bearbeitungsspur 52 und die erfindungsgemäße Vorrichtung kann ein automatische Steuerung der Überladeeinrichtung 3 durchführen.
Auf dem Monitor 20 kann die Bearbeitungsfeldkarte, schematisch der Feldhäcksler 1, schematisch die Überladeeinrichtung 3 und die abgespeicherten Positionen 50,51 auf der zurückliegenden Bearbeitungsspur 52 mit jeweilig entsprechender Ausrichtung zu der Bearbeitungsfeldkarte angezeigt werden. Eine aktivierte Vorrichtung zur Steuerung der Überladerichtung, kann durch entsprechende Anzeigeelemente 17 oder auch durch beispielsweise eine entsprechende Darstellung der Überladeeinrichtung 3 auf dem Monitor 20 erfolgen.

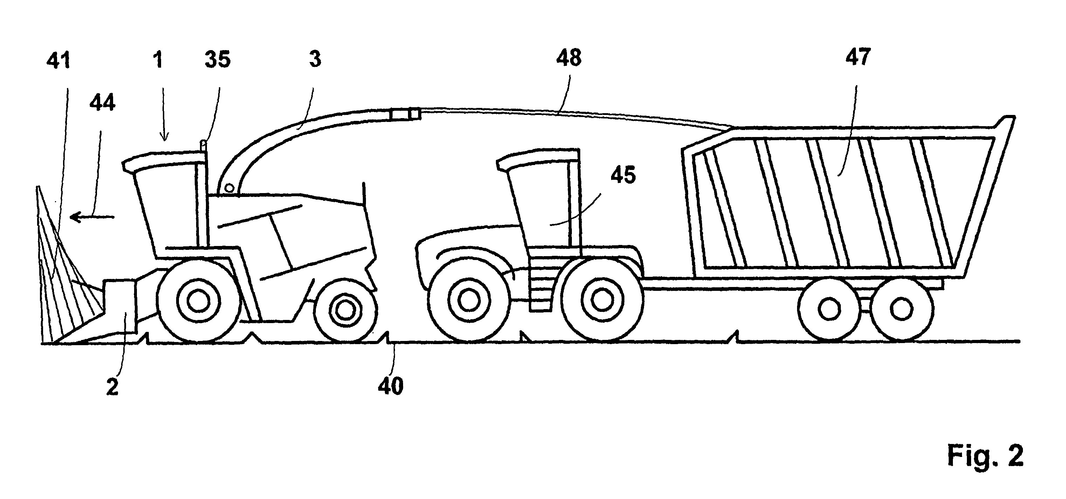

Figur 2 zeigt einen selbstfahrenden Feldhäcksler 1 auf einem Bearbeitungsfeld 40, welcher Erntegut 41, hier beispielsweise stehenden Mais, mit der Erntegutaufnahmeeinrichtung 2 von dem Bearbeitungsfeld 40 aufnimmt, es häckselt und mittels der Überladeeinrichtung 3, entgegen der Ernterichtung 44 an einen, von einem Zugfahrzeug 45 gezogenen Transportbehälter 47 überlädt. Die Überladerichtung der Überladeeinrichtung 3 wird anhand der, mittels der auf dem Fahrerkabinendach des selbstfahrenden Feldhäckslers 1 befindlichen GPS- Antenne 35 ermittelten, zurückliegenden und abgespeicherten Positionen 50,51 des Feldhäckslers 1 gesteuert. Die eingestellte Überladerichtung bestimmt die Flugrichtung des, an der gutabgebenden Seite der Überladeeinrichtung 3 abgegebenen Erntegutes 48. Dieses wird frei durch die Luft in den Transportbehälter 47 überladen.

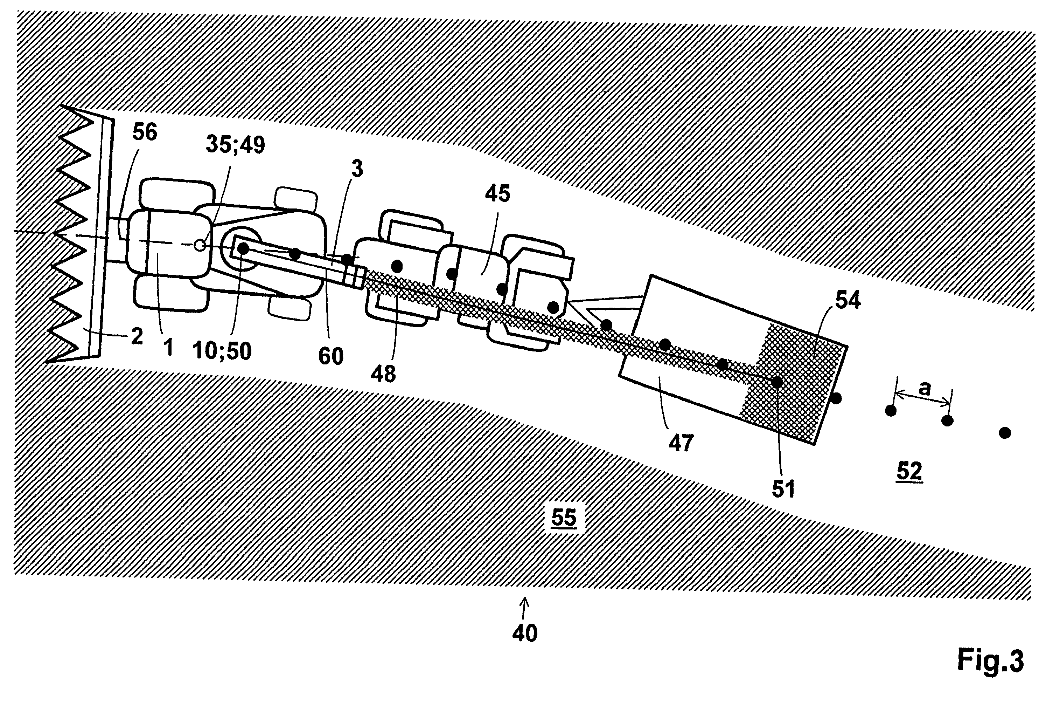

Figur 3 zeigt einen selbstfahrenden Feldhäcksler 1 mit einem von einem Zugfahrzeug 45 gezogenen, nachfolgenden Transportbehälter 47 auf einem Bearbeitungsfeld 40. Der selbstfahrende Feldhäcksler 1 nimmt entlang der Bearbeitungsspur 52 Erntegut 41 von dem Bearbeitungsfeld 40 auf, bearbeitet und überlädt es mittels der Überladeeinrichtung 3, über das Zugfahrzeug 45 hinweg, auf den Transportbehälter 47. Der Transportbehälter 47 ist zum Teil schon mit Erntegut 54 beladen. Links, rechts und vor dem selbstfahrenden Feldhäcksler 1 befindet sich noch weiteres, unbearbeitetes Bearbeitungsfeld 55. Bei dem sogenannten dargestellten Durchstoßen des Bearbeitungsfeldes 40, beispielsweise zur Teilung eines Bearbeitungsfeldes 40 in mehrere Teilfelder, zur Reduzierung von Leerfahrten an dem Bearbeitungsfeldende, ist eine Überladung von Erntegut 48 auf einen Transportbehälter 47 nur in der dargestellten Weise, in Richtung der zurückliegenden Bearbeitungsspur 52 möglich.
Während der Aufnahme von Erntegut 41 von dem Bearbeitungsfeld 40, wird nach dem zurücklegen einer bestimmten Strecke a, die von der auf der Längsachse 56 des Feldhäckslers 1 positionierten Navigationsantenne 35 ermittelte aktuelle Position 49 des Feldhäckslers 1 in eine nicht dargestellten Speichereinrichtung 37 abgespeichert. Diese Strecke a kann der Entfernung zwischen der vertikalen Drehachse 10 und der Navigationsantenne 35 oder einer entsprechenden Vielfachen entsprechen. Eine weitere Vorgabe für die Strecke a, kann aus der gewünschten Überladeweite abgeleitet werden. Ein Optimum stellt die Erfüllung beider Entfernungsvorgaben zur Vorgabe der Strecke a dar.
Zur Bestimmung der Überladerichtung wählt die Auswerteelektronik 30 aus der Speichereinrichtung 37 eine Position 50 in der Nähe der vertikalen Drehachse 10 und einen weitere Position 51, die beispielsweise eine Anzahl von 10 Teilstrecken mit der Entfernung a von der ausgewählten Position 50 zurückliegt, aus. Zwischen beiden Positionen 50,51 liegt nun die Verbindungsstrecke 60. Die relative Richtung dieser Strecke 60 bezogen auf die Längsachse 56 in der Ebene, gibt dann die für eine optimale Überladung notwendige Überladerichtung an. Die Ausrichtung der Längsachse 56 des Feldhäckslers 1 im Bezugsystem, kann anhand eines Kompasses 34 oder anhand der Richtung der Strecke zwischen der aktuellen Position 49 und der zuletzt abgespeicherten Position 50 ermittelt werden. Die gewünschte Überladerichtung wird in einen relativen Winkel zwischen der Längsachse 56 des Feldhäckslers 1 und der Überladeeinrichtung 3 umgerechnet und dann die Überladeeinrichtung 3 entsprechend von der erfindungsgemäßen Vorrichtung so lange verschwenkt, bis dieser gewünschte Winkel eingestellt ist. Befindet sich die Navigationsantenne 35 in der Nähe oder direkt auf der vertikalen Drehachse 10 der Überladeeinrichtung 3 und befindet sich eine weitere Navigationsantenne 36 an der gutabgebenden Seite der Überladeeinrichtung 3, kann auf die Ermittlung der Lage der Längsachse 56 des Feldhäckslers 1 im Bezugsystem verzichtet werden und die tatsächliche Überladerichtung aus der aktuellen Position 49 und aus der Position der weiteren Navigationsantenne 36 ermittelt werden.

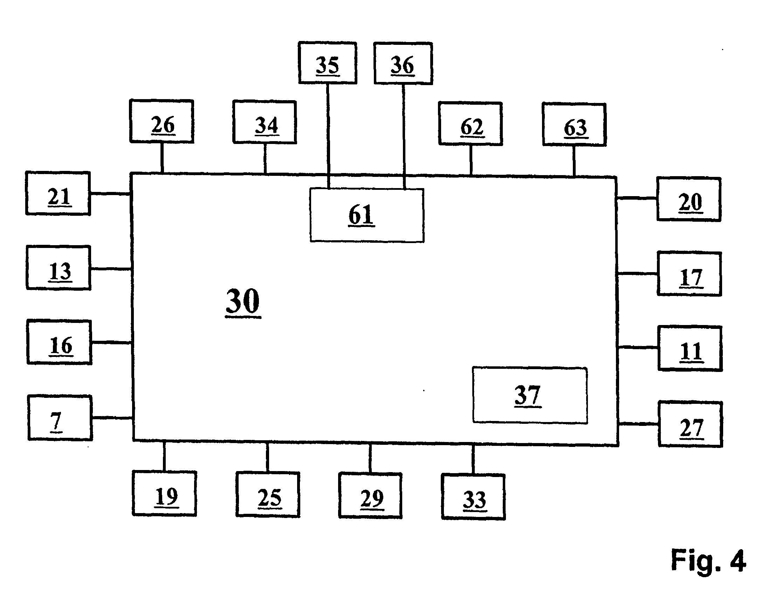

In Figur 4 wird der schematische Aufbau der erfindungsgemäßen Vorrichtung näher dargestellt. Die Auswerteelektronik 30 ist beispielsweise in der Bedienerkonsole 14 in der Fahrerkabine 4 des selbstfahrenden Feldhäckslers 1 anbracht und beinhaltet beispielsweise auch die Navigationseinrichtung 61 und die Speichereinrichtung 37. Die Auswerteelektronik 30 ist zum Austausch von Daten oder Parametern mit den weiteren, elektrischen Einrichtungen oder Sensoren in dem Feldhäcksler 1, beispielsweise mit Einrichtungen zur Ermittlung der Fahrgeschwindigkeit oder mit Einrichtungen zur Ermittlung von Parametern des Erntegutes 48, wie beispielsweise des Erntegutdurchsatzes über eine Busanbindung 62 und gegebenenfalls mit einem Computersystem 63 verbunden. Aus den Signalen und Stellungen der Bedienelementen, wie beispielsweise dem Fußtaster 21, den Schaltern 13 an der Bedienerkonsole 14, den Bedienelementen an dem Multifunktionsgriff 7, erhält die Auswerteelektronik 30 Befehle zur Aktivierung der Vorrichtung oder zur manuellen Steuerung der Überladerichtung. Eine Aktivierung der Vorrichtung kann dann mittels des vorhandenen Monitors 20 beziehungsweise der Anzeigeelemente 17 angezeigt werden. Findet eine Aktivierung oder Deaktivierung der Vorrichtung statt, so kann dies durch ein akustisches Signal, beispielsweise durch einen Summer 11, dem Maschinenbediener angezeigt werden.

Das Drehelement 16 (Potentiometer, stufenloses Stellelement) dient beispielsweise zur Vorgabe eines Korrekturwertes zur Kompensation eines Seitenwindeinflußes auf die Richtung des überladenen Erntegutes 48, beziehungsweise zur Korrektur der Überladerichtung bei einem versetzt zur Fahrspur des selbstfahrenden Feldhäckslers 1 folgenden Transportbehälters 47. Die Korrektur des Windeinflußes kann auch, wenn vorhanden, aus den Meßwerten einer Windmeßeinrichtung 26 abgeleitet werden.
Eine theoretische Überladeweite ermittelt die Auswerteelektronik 30 in Verbindung mit den Signalen der Sensoren 19 und 25, zur Erfassung der Einstellparameter der Überladeeinrichtung 3. Da die tatsächliche Überladeweite von den Parametern des geernteten Erntegutes 48 abhängig ist, können diese bei der Bestimmung der Überladerichtung mit berücksichtigt werden, indem an die Auswerteelektronik 30 auch weitere Sensoren 33, wie beispielsweise ein Erntegutfeuchtesensor, angeschlossen werden.
Die relative Stellung der Überladeeinrichtung 3 zur Längsachse 56 des Feldhäckslers 1, wird durch den Sensor 29 erfaßt und an die Auswerteelektronik 30 übermittelt. Dieser Sensor 29 dient bei der Steuerung beziehungsweise Regelung der Überladerichtung mittels des Hydraulikantriebes 27, auch als Ist-Stellungsanzeiger. Diese Stellung der Überladeeinrichtung 3 kann auf einem Monitor 20, auf einer LCD- Anzeige 17 beziehungsweise auch auf einem Zeigerinstrument dem Maschinenbediener angezeigt werden.
Die aktuelle Position 49 des Feldhäckslers 1 auf dem Bearbeitungsfeld 40, wird durch die Navigationseinrichtung 61 in Verbindung, mit mindestens einer Navigationsantenne 35 ermittelt. Für eine optionale, zweite GPS- Antenne 36 steht eine weitere, entsprechende Anschlußmöglichkeit an der Auswerteelektronik 30 zur Verfügung. Anhand der aktuellen Position 49 kann der Feldhäcksler 1, relativ zu dem Bearbeitungsfeld 40 und im Zusammenhang mit einer Bearbeitungsfeldkarte, schematisch auf einem Monitor 20 dargestellt werden. Für die Darstellung der Längsrichtung 56 des Feldhäckslers 1 in einem Bezugsystem, wird beispielsweise ein Kompaß 34 mit der Auswerteelektronik 30 verbunden, wodurch dann in Verbindung mit der aktuellen Position 49 des Feldhäckslers 1 die Längsachse 56 ermittelt und dargestellt werden kann.

Die erfindungsgemäße Vorrichtung und das Verfahren beschränken sich nicht nur auf den näher dargestellten, selbstfahrenden Feldhäcksler 1 mit einem nachfolgenden Transportbehälter 47, sondern kann, bei einer entsprechenden Ausstattung eines selbstfahrenden Fahrzeuges, auch für jede Art von Überladung von Erntegut 48 auf ein nachfolgenden Transportbehälter 47 angewendet werden. Die Vorrichtung und das Verfahren lassen sich auch dann zur Steuerung der Überladerichtung anwenden, wenn der Transportbehälter 47 direkt an einer selbstfahrenden Erntemaschine 1 angehängt oder in einer besonderen Ausgestaltung auch direkt auf der selbstfahrenden Erntemaschine 1 aufgesattelt ist. Lediglich eine Anpassung der Entfernung beziehungsweise der Anzahl der abgespeicherten Positionen zur Auswahl der Position in der Nähe des Transportbehälters oder die Berechnung der Überladeweite müßte dazu verändert werden.

## Patentansprüche

1. Vorrichtung an einer selbstfahrenden landwirtschaftlichen Erntemaschine (1), insbesondere Feldhäcksler, die Erntegut (41) von einem Bearbeitungsfeld (40) aufnimmt, es bearbeitet und mittels einer Überladeeinrichtung (3) an einen Transportbehälter (47) übergibt, wobei mindestens die Überladerichtung der Überladeeinrichtung (3) automatisiert veränderbar ist und die selbstfahrende landwirtschaftliche Erntemaschine (1) mit einer Navigationseinrichtung (35), zur Ermittlung der Position (49) der Erntemaschine (1) auf dem Bearbeitungsfeld (40), sowie mit mindestens einer Speichereinrichtung (37), in die mindestens eine ermittelte Position (49,50,51) der Erntemaschine (1) abgespeichert werden kann, ausgestattet ist,
dadurch gekennzeichent,daß
die Überladerichtung der Überladeeinrichtung (3) in Abhängigkeit von zumindest zwei von der Navigationseinrichtung (35) ermittelten, von einander beabstandeten Positionen (49,50,51) der Erntemaschine (1) ermittelt wird.

2. Vorrichtung nach Anspruch 1,
**dadurch gekennzeichnet,daß**
die Navigationsantenne (35) direkt auf oder nahe an der vertikalen Drehachse (10) der Überladeeinrichtung (3) angeordnet ist.

3. Vorrichtung nach mindestens einem der Ansprüche 1 oder 2,
**dadurch gekennzeichnet,daß**
an der Überladeeinrichtung (3) eine weitere Navigationseinrichtung (36), beispielsweise eine weitere GPS- Antenne, angebracht ist.

4. Vorrichtung nach mindestens einem der Ansprüche 1 bis 3,
**dadurch gekennzeichnet,daß**
das Abspeichern und/oder das Abrufen von wenigstens einer Position (50,51) in und/oder aus der Speichereinrichtung (37) in Abhängigkeit von wenigstens einer vorgegebenen Abmessung oder zurückgelegten Fahrstrecke der Erntemaschine (1) erfolgt.

5. Vorrichtung nach mindestens einem der Ansprüche 1 bis 4,
**dadurch gekennzeichnet,daß**
die Auswahl der in der Speichereinrichtung (37) zurückliegenden, abgespeicherten Position (50,51) der Erntemaschine (1) anhand der vorgegebenen Überladeweite der Überladeeinrichtung (3) vorgenommen wird.

6. Vorrichtung nach mindestens einem der Ansprüche 1 bis 5,
**dadurch gekennzeichnet,daß**
bei der Berechung der Überladerichtung und/oder der Überladeweite Einstellparametern der Überladeeinrichtung (3) und gegebenenfalls auch auf die Überladung Einfluß nehmende Parameter berücksichtigt werden.

7. Vorrichtung nach mindestens einem der Ansprüche 1 bis 6,
**dadurch gekennzeichnet,daß**
die Vorrichtung mit einer in einer Speichereinrichtung (37) hinterlegten, digitalen Bearbeitungsfeldkarte in Verbindung steht.

8. Verfahren zur Ermittlung der Überladerichtung nach mindestens einem der Ansprüche 1 bis 8,
**dadurch gekennzeichnet,daß**
eine abgespeicherte, zurückliegende Position (50,51) der Erntemaschine (1) aus der Speichereinrichtung (37) ausgewählt,
die Richtung der Strecke (60) von dieser Position (50) zu einer weiteren Position (51) der Erntemaschine (1) ermittelt
und aus dieser Richtung ein Steuersignal zur Einstellung der Überladeeinrichtung (3) auf diese ermittelte Richtung erzeugt wird.

9. Verfahren nach Anspruch 8,
**dadurch gekennzeichnet,daß**
die weitere Position der Erntemaschine (1) die aktuelle Position (49) der Erntemaschine (1) ist.

10. Verfahren nach Anspruch 8,
**dadurch gekennzeichnet,daß**
die weitere Position der Erntemaschine (1) eine abgespeicherte, zurückliegende Position (50,51) der Erntemaschine (1) ist und diese anhand des bekannten Abstandes (a) zwischen der Antennen (35) und der vertikalen Drehachse (10) der Überladeeinrichtung (3) aus der Speichereinrichtung (37) ausgewählt wird.

11. Verfahren nach mindestens einem der Ansprüche 8 bis 10,
**dadurch gekennzeichnet,daß**
aus den abgespeicherten, zurückliegenden Positionen (50,51) eine zusammenhängende Bearbeitungsspur ermittelt,
aus der Bearbeitungsspur zwei Punkte ausgewählt werden, der erste Punkt in der Nähe der vertikalen Drehachse (10) der Überladeeinrichtung (3) und der zweite Punkt in einer vorgegebenen Entfernung, beispielsweise der gewünschte Überladeweite, zurückliegend auf der berechneten Bearbeitungsspur von dem ersten Punkt,
die Richtung der Strecke von dem ersten Punkt zu dem zweiten Punkt bestimmt
und aus dieser Richtung ein Steuersignal zur Einstellung der Überladeeinrichtung (3) auf diese ermittelte Richtung erzeugt wird.

12. Verfahren nach mindestens einem der Ansprüche 8 bis 11,
**dadurch gekennzeichnet,daß**
die Vorrichtung automatisch aktiviert wird, wenn aus einer digitalen Bearbeitungsfeldkarte und der aktuellen Position (49) der Erntemaschine (1) erkannt wird, daß eine bevorstehende Überladung von Erntegut (48) auf einen Transportbehälter (47) nur in Richtung der zurückliegenden Bearbeitungsspur (52) der Erntemaschine (1) möglich ist.

13. Verfahren nach mindestens einem der Ansprüche 8 bis 12,
**dadurch gekennzeichnet,daß**
eine durch den Maschinenbediener durchgeführte, manuelle Korrektur der Überladeeinrichtung (3), so lange als Korrekturwert bei der Ermittlung der Überladerichtung berücksichtigt wird, bis die Vorrichtung ein erneutes Aktivierungssignal erhält.

## Claims

1. Apparatus on a self-propelled agricultural harvester (1), in particular a forage harvester, which picks up crop material (41) from a field (40) to be worked upon, works upon it and transfers it by means of a transloading device (3) to a transport container (47), wherein at least the transloading direction of the transloading device (3) is variable as an automated procedure and the self-propelled agricultural harvester (1) is equipped with a navigation device (35) for ascertaining the position (49) of the harvester (1) on the field (40) to be worked upon and at least one storage device (37) in which at least one ascertained position (49, 50, 51) of the harvester (1) can be stored,
**characterised in that**
the transloading direction of the transloading device (3) is ascertained in dependence on at least two mutually spaced positions (49, 50, 51) of the harvester (1), which are ascertained by the navigation device (35).

2. Apparatus according to claim 1 **characterised in that** the navigation antenna (35) is arranged directly on or near to the vertical rotary axis (10) of the transloading device (3).

3. Apparatus according to at least one of claims 1 and 2 **characterised in that** mounted to the transloading device (3) is a further navigation device (36), for example a further GPS antenna.

4. Apparatus according to at least one of claims 1 to 3 **characterised in that** storage and/or call-up of at least one position (50, 51) in and/or from the storage device (37) takes place in dependence on at least one predetermined dimension of or travel distance covered by the harvester (1).

5. Apparatus according to at least one of claims 1 to 4 **characterised in that** the choice of the stored position (50, 51) of the harvester (1), which is back in the storage device (37), is effected on the basis of the predetermined transloading width of the transloading device (3).

6. Apparatus according to at least one of claims 1 to 5 **characterised in that** adjustment parameters of the transloading device (3) and possibly also parameters which influence transloading are taken into account when calculating the transloading direction and/or the transloading width.

7. Apparatus according to at least one of claims 1 to 6 **characterised in that** the apparatus is connected to a digital map of the field to be worked upon, which is stored in a storage device (37).

8. A method of ascertaining the transloading direction according to at least one of claims 1 to 8
**characterised in that**
a stored previous position (50, 51) of the harvester (1) is selected from the storage device (37),
the direction of the route (60) from that position (50) to a further position (51) of the harvester (1) is ascertained,
and from that direction a control signal for setting the transloading device (3) to that ascertained direction is produced.

9. A method according to claim 8 **characterised in that** the further position of the harvester (1) is the current position (49) of the harvester (1).

10. A method according to claim 8 **characterised in that** the further position of the harvester (1) is a stored previous position (50, 51) of the harvester (1) and same is selected from the storage device (37) on the basis of the known distance (a) between the antenna (35) and the vertical rotary axis (10) of the transloading device (3).

11. A method according to at least one of claims 8 to 10 **characterised in that**
a continuous working track is ascertained from the stored previous positions (50,51),
two points are selected from the working track, the first point in the proximity of the vertical rotary axis (10) of the transloading device (3) and the second point at a predetermined distance, for example the desired transloading width, back on the calculated working track from the first point,
the direction of the route from the first point to the second point is determined,
and from said direction a control signal for setting the transloading device (3) to said ascertained direction is produced.

12. A method according to at least one of claims 8 to 11 **characterised in that** the apparatus is automatically activated when it is recognised from a digital map of the field to be worked upon and the current position (49) of the harvester (1) that impending transloading of crop material (48) on to a transport container (47) is possible only in the direction of the previous working track (52) of the harvester (1).

13. A method according to at least one of claims 8 to 12 **characterised in that** manual correction of the transloading device (3), which is effected by the machine operator, is taken into consideration as a correction value in ascertaining the transloading direction until the apparatus receives a renewed activation signal.

## Revendications

1. Dispositif sur une machine agricole de récolte (1) automotrice, en particulier une ensileuse, qui ramasse le produit à récolter (41) sur un champ à récolter (40), le traite et le transfère dans un conteneur de transport (47) à l'aide d'un dispositif de transfert (3), au moins la direction de transfert du dispositif de transfert (3) pouvant être modifiée de manière automatisée et la machine agricole de récolte (1) automotrice étant équipée d'un dispositif de navigation (35) pour déterminer la position (46) de la machine de récolte (1) sur le champ à récolter (40) ainsi que d'au moins un dispositif de mémoire (37) dans lequel une position (49, 50, 51) déterminée de la machine de récolte (1) peut être stockée, **caractérisé par le fait que** la direction de transfert du dispositif de transfert (3) est déterminée en fonction d'au moins deux positions (49, 50, 51) espacées l'une de l'autre de la machine de récolte (1) déterminées par le dispositif de navigation (35).

2. Dispositif selon la revendication 1, **caractérisé par le fait que** l'antenne de navigation (35) est disposée directement sur ou dans le voisinage de l'axe de rotation (10) du dispositif de transfert (3).

3. Dispositif selon la revendication 1 ou 2, **caractérisé par le fait qu'**un dispositif de navigation (36) supplémentaire, par exemple une antenne GPS supplémentaire est montée sur le dispositif de transfert (3).

4. Dispositif selon au moins une des revendications 1 à 3, **caractérisé par le fait que** la mémorisation et/ou la lecture d'au moins une position (50, 51) dans/à partir du dispositif de mémoire (37) a lieu en fonction d'au moins une dimension prédéterminée ou du chemin parcouru par la machine de récolte (1).

5. Dispositif selon au moins une des revendications 1 à 4, **caractérisé par le fait que** la sélection de la position (50, 51) antérieure de la machine de récolte (1) mémorisée dans le dispositif de mémoire (37) a lieu sur la base de la distance de transfert prédéterminée du dispositif de transfert (3).

6. Dispositif selon au moins une des revendications 1 à 5, **caractérisé par le fait que** pour le calcul de la direction de transfert et/ou de la distance de transfert on tient compte de paramètres réglés du dispositif de transfert (3) et le cas échéant de paramètres influant sur le transfert.

7. Dispositif selon au moins une des revendications 1 à 6, **caractérisé par le fait que** le dispositif est connecté à une carte numérique du champ récolté stockée dans un dispositif de mémoire.

8. Procédé pour déterminer la direction de transfert selon au moins une des revendications 1 à 8, **caractérisé par le fait**
**qu'**on sélectionne une position (50, 51) antérieure mémorisée de la machine de récolte (1) dans le dispositif de mémoire (37),
**qu'**on détermine la direction du chemin (60) entre cette position (50) et une position (51) supplémentaire de la machine de récolte (1) et
à partir de cette direction, on produit un signal de commande pour le réglage du dispositif de transfert (3) dans cette direction déterminée.

9. Procédé selon la revendication 8, **caractérisé par le fait que** la position supplémentaire de la machine de récolte (1) est la position (49) actuelle de la machine de récolte (1).

10. Procédé selon la revendication 8, **caractérisé par le fait que** la position supplémentaire de la machine de récolte (1) est une position (50, 51) antérieure mémorisée de la machine de récolte (1) et qu'on sélectionne celle-ci dans le dispositif de mémoire (37) sur la base de la distance (a) connue entre les antennes (35) et l'axe de pivotement (10) vertical du dispositif de transfert (3).

11. Procédé selon au moins une des revendications 8 à 10, **caractérisé par le fait**
**qu'**à partir des positions (50, 51) antérieures mémorisées, on détermine une trace de travail associée,
**qu'**à partir de la trace de travail, on sélectionne deux points, le premier point dans le voisinage de l'axe de pivotement (10) vertical du dispositif de transfert (3) et le second point à une distance prédéterminée, par exemple la distance de transfert souhaitée, en arrière par rapport au premier point sur la trace de travail calculée,
on détermine la direction du trajet entre le premier point et le second point et
sur la base de cette direction, on produit un signal de commande pour régler le dispositif de transfert (3) dans la direction déterminée.

12. Procédé selon au moins une des revendications 8 à 11, **caractérisé par le fait que** le dispositif est activé de manière automatique lorsque, sur la base de la carte numérique du champ récolté et de la position actuelle (49) de la machine de récolte (1), on établit qu'un transfert à venir du produit récolté (48) dans un conteneur de transport (47) ne peut avoir lieu que dans la direction de la trace de travail (52) antérieure de la machine de récolte (1).

13. Procédé selon au moins une des revendications 8 à 12, **caractérisé par le fait qu'**une correction manuelle du dispositif de transfert (3) opérée par le conducteur de la machine est prise en compte comme valeur de correction dans la détermination de la direction de transfert jusqu'à ce que le dispositif reçoive un nouveau signal d'activation.
